# FASCICULE DE BREVET EUROPEEN

(11) **EP 0 672 497 B1**
(45) Date de publication et mention de la délivrance du brevet: **20.05.1998**
(21) Numéro de dépôt: 95400284.6
(22) Date de dépôt: 10.02.1995
(51) Int. Cl.: B23P 15/00, A47J 36/02, B05D 5/08

(54) **Procédé pour former un décor sur un ustensile culinaire**
Verfahren zum Herstellen einer Dekoration auf einem Küchengerät
Method of forming a decoration on a cooking utensil

(30) Priorité: 15.02.1994 FR 9401708
(43) Date de publication de la demande: 20.09.1995
(73) Titulaire: SEB S.A., 69130 Ecully (FR)
(72) Inventeur: Brasset, Jean- Francois, 74960 Cran-Gevrier (FR); Maillard, Philippe, 74150 Moye (FR)
(74) Mandataire: Keib, Gérard

(56) Documents cités:
- EP-A- 0 188 958
- EP-A- 0 247 932
- CH-A- 477 565
- DE-U- 8 622 923
- FR-A- 2 643 806

## Description

La présente invention concerne un procédé pour former sur une face d'un ustensile culinaire métallique, un décor à base de résine fluorocarbonée et d'un pigment coloré, recouvrant partiellement ladite face.

Les ustensiles culinaires antiadhérents dont l'extérieur est également couvert d'un revêtement antiadhérent présentent habituellement un fond extérieur dressé (c'est-à-dire que le revêtement de résine fluorocarbonée telle que le PTFE a été éliminé par usinage).

Ce fond en aluminium est donc constitué d'un sillon en spirale de profondeur variable qui a le défaut de s'encrasser rapidement à l'utilisation. En plus d'être inesthétique, il est très difficile à nettoyer et son aspect se dégrade de plus en plus avec l'usage.

Un aspect brossé du fond peut améliorer le nettoyage mais reste cependant inesthétique.

Conformément au procédé décrit dans EP-A-0 188 958, on attaque chimiquement une face d'un ustensile culinaire métallique pour former sur celle-ci des cavités, on applique sur ladite face une composition à base de résine fluorocarbonée et d'un pigment coloré, on applique sur celle-ci, à travers un écran sérigraphique, une composition colorée renfermant une dispersion aqueuse de résine fluorocarbonée ou une poudre de résine fluorocarbonée additionnée d'un agent épaississant et/ou gélifiant et d'un solvant miscible à l'eau, et on chauffe pour faire cuire les deux couches.

Il a ainsi été envisagé d'appliquer directement sur le métal de l'ustensile un décor à base de résine fluorocarbonée et de pigment pour améliorer l'esthétique.

Le but de la présente invention est donc de réaliser directement sur le métal d'une face, par exemple le fond d'un ustensile, un décor présentant une excellente adhérence, l'ensemble de la face présentant ce décor étant peu sensible à l'encrassement et facilement nettoyable.

Suivant l'invention, ce procédé est caractérisé par les étapes suivantes:
a) on attaque chimiquement, au moins ladite face de l'ustensile pour former sur celle-ci des microcavités d'accrochage;
b) on applique directement sur des zones prédéterminées de ladite face délimitant le décor, une composition à base de résine fluorocarbonée et d'un pigment coloré;
c) on chauffe pour faire cuire la résine fluorocarbonée dudit décor;
d) on applique sur ladite face, y compris ledit décor, une surface de pressage, avec une pression suffisante pour éliminer les microcavités situées à l'extérieur des zones recouvertes par le décor.

L'application de la surface de pressage sur la face présentant le décor a pour effet:
d'une part d'écraser le décor à base de résine fluorocarbonée ce qui améliore son accrochage dans les microcavités; et
d'autre part d'écraser les microcavité situées dans les zones extérieures au décor, ce qui a pour effet d'éliminer les microcavités et d'obtenir une surface lisse facilement nettoyable d'aspect métallique.

Dans une version préférée de l'invention:
- on soumet un disque en aluminium à une attaque acide pour créer des microcavités sur ses deux faces;
- on applique sur l'une des faces du disque, une couche de résine fluorocarbonée;
- on applique sur l'autre face de disque, un décor à base de résine fluorocarbonée et de pigment;
- on chauffe le disque pour obtenir la cuisson de la résine fluorocarbonée présente sur les deux faces du disque;
- on applique sur la face présentant le décor une surface de pressage pour écraser et éliminer les microcavités.

D'autres particularités et avantages de l'invention apparaîtront encore dans la description ci-après.

Aux dessins annexés donnés à titre d'exemples non limitatifs:
- la figure 1 est une vue en coupe partielle du fond d'un ustensile culinaire comportant un décor obtenu conformément au procédé selon l'invention;
- la figure 2 est une vue analogue à la figure 1 montrant l'état de la surface après l'étape de pressage;
- la figure 3 est une vue analogue à la figure 2 montrant une variante dans laquelle, on réalise un creux lors de l'étape de pressage;
- la figure 4 est une vue analogue à la figure 3 montrant une autre variante dans laquelle, on réalise un relief lors de l'étape de pressage;
- la figure 5 est une vue en plan du fond d'une poêle comportant un décor réalisé conformément à l'invention.

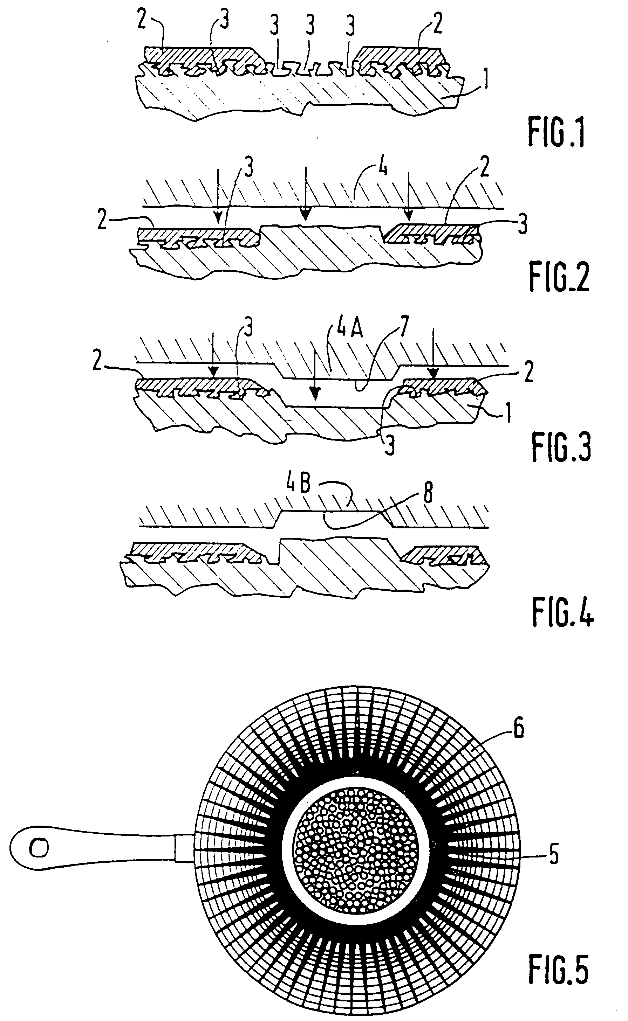

En référence aux figures annexées, le procédé pour former sur une face d'un ustensile culinaire métallique 1, un décor 2 à base de résine fluorocarbonée et d'un pigment coloré, recouvrant partiellement ladite face comprend les étapes suivantes:
a) on attaque chimiquement (voir figure 1), au moins une face de l'ustensile pour former sur celle-ci des microcavités 3 d'accrochage;
b) on applique directement sur des zones prédéterminées de ladite face délimitant le décor 2, une composition à base de résine fluorocarbonée et d'un pigment coloré;
c) on chauffe pour faire cuire la résine fluorocarbonée dudit décor;
d) on applique sur ladite face, y compris ledit décor 2 (voir figure 2), une surface de pressage 4, avec une pression suffisante pour éliminer les microcavités 3 situées à l'extérieur des zones recouvertes par le décor 2.

De préférence l'ustensile culinaire 1 est réalisé par emboutissage à partir d'une feuille d'aluminium ou d'alliage d'aluminium.

Le décor 2 peut être appliqué sur ladite face à travers un écran sérigraphique, conformément au procédé décrit dans le brevet européen n° 188 958 au nom de la demanderesse.

Dans les exemples des figures 3 et 4, la surface de pressage 4A, 4B présente un relief 7, 8 pour créer dans la zone de la face de l'ustensile extérieure au décor 2 une ou des cavités ou des reliefs en saillie dont la surface est également rendue lisse par écrasement des microcavités.

Le décor 2 peut également être appliqué à partir d'une suspension aqueuse par pulvérisation PTFE et de pigment à travers un masque ou toute autre méthode connue.

Dans la pratique, on procède de préférence comme suit:
- on soumet un disque 1 en aluminium à une attaque acide pour créer des microcavités 3 sur ses deux faces;
- on applique sur l'une des faces du disque, une couche de résine fluorocarbonée;
- on applique sur l'autre face de disque, un décor 2 à base de résine fluorocarbonée et de pigment;
- on chauffe le disque dans un four à 400-450°C pour obtenir la cuisson de la résine fluorocarbonée présente sur les deux faces du disque;
- on applique sur la face présentant le décor 2 une surface de pressage 4, 4A ou 4B pour écraser et éliminer les microcavités 3. La pression engendrée lors du pressage doit être égale à au moins 600 kg/cm².

La figure 5 montre à titre d'exemple une poêle à frire dont le fond présente une zone décorée 5 et une zone extérieure 6 ou le métal est nu, mais rendu lisse grâce au procédé selon l'invention.

Le décor 5 non seulement est solidement ancré aux microcavités grâce au pressage, mais la zone 6 rendue lisse est facilement nettoyable.

## Revendications

1. Procédé pour former sur une face d'un ustensile culinaire métallique (1), un décor (2) à base de résine fluorocarbonée et d'un pigment coloré, recouvrant partiellement ladite face, comprenant les étapes suivantes:
a) on attaque chimiquement au moins, ladite face de l'ustensile (1) pour former sur celle-ci des microcavités (3) d'accrochage;
b) on applique directement sur des zones prédéterminées de ladite face délimitant le décor (2), une composition à base de résine fluorocarbonée et d'un pigment coloré;
c) on chauffe pour faire cuire la résine fluorocarbonée dudit décor;
d) on applique sur ladite face, y compris ledit décor (2), une surface de pressage (4, 4A, 4B), avec une pression suffisante pour éliminer les microcavités (3) situées à l'extérieur des zones recouvertes par le décor et redonner un aspect brillant métallique.

2. Procédé conforme à la revendication 1, caractérisé en ce que l'ustensile culinaire (1) est réalisé par emboutissage à partir d'une feuille d'aluminium ou d'alliage d'aluminium.

3. Procédé conforme à l'une des revendications 1 ou 2, caractérisé en ce que ledit décor (2) est appliqué sur ladite face à travers un écran sérigraphique.

4. Procédé conforme à l'une des revendications 1 ou 2, caractérisé en ce que ledit décor (2) est appliqué par pulvérisation sur ladite face à travers un masque.

5. Procédé conforme à l'une des revendications 1 à 4, caractérisé par les étapes suivantes:
- on soumet un disque (1) en aluminium à une attaque acide pour créer des microcavités (3) sur ses deux faces;
- on applique sur l'une des faces du disque, une couche de résine fluorocarbonée;
- on applique sur l'autre face de disque, un décor (2) à base de résine fluorocarbonée et de pigment;
- on chauffe le disque pour obtenir la cuisson de la résine fluorocarbonée présente sur les deux faces du disque;
- on applique sur la face présentant le décor (1) une surface de pressage (4, 4A, 4B) pour écraser et éliminer les microcavités (3).

6. Procédé conforme à l'une des revendications 1 à 5, caractérisé en ce que la surface de pressage (4A, 4B) présente un relief pour créer dans la zone de la face de l'ustensile extérieure au décor (2) une ou des cavités ou des reliefs en saillie.

## Claims

1. A method of forming on a surface of a metal culinary utensil (1) a decoration (2) based on fluorocarbon resin and a coloured pigment partially covering the said surface, comprising the following steps:
(a) at least the said surface of the utensil (1) is attacked chemically to form keying microcavities (3) thereon;
(b) a composition based on fluorocarbon resin and a coloured pigment is applied directly to predetermined zones of the said surface bounding the decoration (2);
(c) the fluorocarbon resin of the said decoration is cured by heating;
(d) a pressing surface (4, 4A, 4B) is applied to the said surface, including the said decoration (2), with a pressure sufficient to eliminate the microcavities (3) situated outside the zones covered by the decoration and to restore a bright metal appearance.

2. A method according to claim 1, characterised in that the culinary utensil (1) is made by stamping from a sheet of aluminium or aluminium alloy.

3. A method according to claim 1 or 2, characterised in that the said decoration (2) is applied to the said surface through a silk-screen printing screen.

4. A method according to claim 1 or 2, characterised in that the said decoration (2) is applied by spraying on said surface through a mask.

5. A method according to any one of claims 1 to 4, characterised by the following steps:
- an aluminium disc (1) is subjected to acid attack in order to produce microcavities (3) on its two surfaces;
- a layer of fluorocarbon resin is applied to one of the surfaces of the disc;
- a decoration (2) based on fluorocarbon resin and pigment is applied to the other surface of the disc;
- the disc is heated to cure the fluorocarbon resin present on the two surfaces of the disc;
- a pressing surface (4, 4A, 4B) is applied to the surface having the decoration (1) in order to crush and eliminate the microcavities (3).

6. A method according to any one of claims 1 to 5, characterised in that the pressing surface (4A, 4B) has a relief in order to produce in the zone of the surface of the utensil outside the decoration (2) one or more cavities or projecting reliefs.

## Patentansprüche

1. Verfahren zur Herstellung eines Dekors (2) auf der Basis von Fluorkohlenstoffharz und einem Farbpigment auf einer Fläche eines metallischen Küchengerätes (1), wobei es die Fläche teilweise bedeckt, mit den folgenden Schritten:
a) die Fläche des Gerätes (1) wird zumindest chemisch aufgeschlossen, um auf dieser Mikroaushöhlungen (3) zum Anhaften zu bilden;
b) auf den vorbehandelten Bereichen der das Dekor (2) abgrenzenden Fläche wird direkt eine Verbindung auf der Basis von Fluorkohlenstoffharz und einem Farbpigment aufgetragen;
c) es wird erhitzt, um das Fluorkohlenstoffharz des Dekors härten zu lassen;
d) auf der Fläche mit dem Dekor (2) wird eine Preßfläche (4, 4A, 4B) angeordnet mit einem ausreichenden Druck zur Eliminierung der Mikroaushöhlungen (3), die außerhalb von den durch das Dekor bedeckten Bereichen angeordnet sind, und zum Wiedererlangen eines metallischen Glanzaussehens.

2. Verfahren gemäß Anspruch 1, dadurch gekennzeichnet, daß das Küchengerät (1) durch Tiefziehen einer Folie aus Aluminium oder Aluminiumlegierung hergestellt wird.

3. Verfahren gemäß einem der Ansprüche 1 oder 2, dadurch gekennzeichnet, daß das Dekor (2) auf der Fläche durch eine Siebdruckschablone aufgebracht wird.

4. Verfahren gemäß einem der Ansprüche 1 oder 2, dadurch gekennzeichnet, daß das Dekor (2) durch Spritzen durch eine Maske auf die Fläche aufgebracht wird.

5. Verfahren gemäß einem der Ansprüche 1 bis 4, gekennzeichnet durch die folgenden Schritte:
- eine Scheibe (1) aus Aluminium wird einem Säureaufschluß unterzogen, um Mikroaushöhlungen (3) auf ihren beiden Seiten herzustellen;
- auf einer der Seiten der Scheibe wird eine Fluorkohlenstoffharzschicht aufgetragen;
- auf der anderen Seite der Scheibe wird ein Dekor (2) auf der Basis von Fluorkohlenstoffharz und einem Pigment aufgetragen;
- die Scheibe wird erhitzt, um die Härtung des auf den beiden Seiten der Scheibe vorhandenen Fluorkohlenstoffharzes zu erhalten;
- auf die das Dekor aufweisende Seite (1) wird eine Preßfläche (4, 4A, 4B) zum Plattdrücken und Entfernen der Mikroaushöhlungen (3) gelegt.

6. Verfahren gemäß einem der Ansprüche 1 bis 5, dadurch gekennzeichnet, daß die Preßfläche (4A, 4B) ein Relief aufweist, um in dem Bereich der Fläche des Gerätes, der außerhalb des Dekors (2) liegt, eine oder mehrere Aushöhlungen oder vorspringende Erhöhungen herzustellen.
